# FASCICULE DE BREVET EUROPEEN

(11) **EP 3 300 511 B1**
(45) Date de publication et mention de la délivrance du brevet: **19.06.2019**
(21) Numéro de dépôt: 16705564.9
(22) Date de dépôt: 19.01.2016
(51) Int. Cl.: F01M 9/06, F01M 9/10, F01M 9/12, F16N 7/18

(54) **SYSTEME DE LUBRIFICATION D'UN MOTEUR BASÉ SUR L'UTILISATION D'UNE CHAINE DE DISTRIBUTION**
MOTORSCHMIERSYSTEM DAS EINE STEUERKETTE VERWENDET
ENGINE LUBRICATION SYSTEM USING A TIMING CHAIN

(30) Priorité: 16.04.2015 FR 1553408
(43) Date de publication de la demande: 04.04.2018
(73) Titulaire: Renault S.A.S., 92100 Boulogne-Billancourt (FR)
(72) Inventeur: MOULIN, Jean-François, 92800 Puteaux (FR); JUSTET, Frédéric, 91190 Gif sur Yvette (FR); AIT MOKHTAR, Ahcene, 78180 Montigny Le Bretonneux (FR)
(86) Numéro de dépôt international: PCT/FR2016/050090
(87) Numéro de publication internationale: WO 2016/166430

(56) Documents cités:
- EP-A1- 0 839 992
- AT-A2- 506 467
- GB-A- 191 224 588
- US-A- 2 620 897
- US-A1- 2002 007 812

## Description

L'invention concerne le domaine des systèmes de lubrification pour moteurs, en particulier pour les moteurs de véhicules automobiles. Plus particulièrement, l'invention concerne un système de lubrification sans nécessiter de pompe à huile d'un moteur.

La lubrification joue un rôle important pour limiter l'usure et l'échauffement des pièces en mouvement dans un moteur. Dans les moteurs classiques, un réservoir d'huile est disposé en dessous d'un carter. Une pompe à huile entraînée par le vilebrequin aspire cette huile puis la refoule avec une certaine pression dans un circuit qui assure la lubrification des pièces en mouvement, telles que les articulations, les pistons, les engrenages et les culbuteurs. L'huile retombe ensuite dans le réservoir notamment sous l'effet de la gravité.

Dans le secteur compétitif de l'automobile, les constructeurs ont pour objectif de réduire les coûts, entre autres, du moteur pour gagner en compétitivité. L'une des pistes envisagées pour réduire le coût du moteur est de supprimer la pompe à huile pour lubrifier certaines pièces ce qui permet d'utiliser une pompe à huile de moindre puissance. Cependant, sans huile sous pression, la lubrification des différentes pièces du moteur n'est pas possible.

Une telle suppression de la pompe à huile nécessite donc de trouver d'autres moyens permettant d'assurer la lubrification des pièces en mouvement dans le moteur. Or, l'état de la technique actuel ne propose pas une telle solution.

L'objectif de l'invention est donc de proposer un moyen permettant d'assurer la lubrification de certaines pièces d'un moteur sans nécessiter de pompe à huile. Une telle alternative à la pompe à l'huile doit en outre être peu chère et facile de mise en oeuvre.

Ces objectifs sont réalisés grâce à un système de captage d'huile d'un moteur, caractérisé en ce qu'il comprend,
- un carter du moteur comprenant des parois internes, ledit carter comportant une quantité d'huile dans une partie basse de ce carter,
- une chaine de distribution comportant des maillons aptes à remonter de l'huile d'une partie basse du moteur vers une partie haute du moteur et à projeter cette huile sur les parois internes du carter situées dans la partie haute du moteur, lors du mouvement de ladite chaine de distribution,
- des moyens de transfert, agencés dans la partie basse du carter de manière à transférer au moins une partie de l'huile de ladite partie basse du carter aux maillons de la chaine de distribution, lorsque la chaine de distribution est en mouvement,

L'huile captée et acheminée par la chaine est réceptionnée dans une partie haute du moteur pour être conduite par gravité vers des pièces en mouvement du moteur. Ainsi, la lubrification selon l'invention est basée sur l'utilisation de la chaine de distribution d'un moteur pour remonter l'huile servant à la lubrification, du bas du moteur vers le haut du moteur. À cela s'ajoutent des moyens agencés en bas du moteur pour charger les maillons de la chaine de distribution avec de l'huile. Des moyens sont aussi agencés en haut du moteur pour récupérer l'huile projetée par la chaine de distribution sur les parois internes du carter et l'orienter vers un circuit de lubrification. Un tel système de captage permet donc de se passer de l'usage d'une pompe à huile de façon efficace. Ceci concerne notamment des moteurs dont le besoin en lubrification pour certaines pièces telles que les paliers d'arbre à cames ou les contacts entre les cames et poussoirs, est faible. Par exemple, des moteurs à très faible consommation ou des moteurs d'entrée de gamme.

Ce système de captage est également simple de mise en oeuvre et peu cher, puisqu'il se sert de la chaine de distribution qui est déjà présente dans le moteur à laquelle il associe des moyens simples et peu couteux pour permettre l'embarquement de l'huile dans la chaine de distribution et pour la récupération et la redirection de l'huile vers des pièces mobiles.

Selon un mode de réalisation, les moyens de transfert de l'huile comportent un galet roulant de friction. Ledit galet est monté mobile en rotation autour d'un axe sensiblement parallèle à l'axe du vilebrequin. Ce galet est maintenu en contact permanent avec la chaine de distribution qui l'entraine en rotation.

Avantageusement, le galet roulant de friction est maintenu en contact avec la chaine de distribution par un ressort. L'utilisation d'un tel ressort permet d'assurer un bon contact entre la chaine de distribution et le galet lorsque ces deux éléments sont en mouvement.

Avantageusement, le galet roulant de friction comporte dans une partie périphérique radialement extérieure de ce galet un élément souple. L'utilisation d'un élément souple est un bon moyen pour augmenter la quantité d'huile embarquée puis transférée à la chaine de distribution. Un élément souple permet également de réduire les frottements entre le galet et les maillons de la chaine de distribution.

Avantageusement, l'élément souple est adhérisé. L'adhérisation est une technique qui permet d'obtenir un bon maintien de l'élément souple en périphérie du galet.

Selon une application, l'élément souple est un élastomère ou un Viton®.

Un tel élément souple est par exemple un joint torique.

Avantageusement, l'élément souple a une dureté entre 50 et 80 shore. Le choix de la valeur de la dureté nécessite un compromis entre la résistance à l'usure et l'efficacité de transfert de l'huile de la partie basse du carter aux maillons de la chaine de distribution. En effet, plus la valeur choisie est proche de 50 shore, plus l'élément souple est mou. De ce fait, lors du contact de cet élément de transfert avec la chaine de distribution, un bon contact est atteint avec les maillons de cette chaine. Ainsi, le taux de transfert de l'huile embarquée par l'élément de transfert est élevé. Cependant, l'élément souple étant mou, il s'use plus facilement à cause de la friction contre les maillons de la chaine de distribution.

Au contraire, plus la valeur de la dureté est proche des 80 shore, plus l'élément souple est plus dur. Dans ce cas, la vitesse de l'usure par friction avec les maillons de la chaine de distribution est réduite, car la surface de contact est également réduite. Cependant, à cause de cette réduction de la surface de contact, la quantité d'huile transférée est également réduite.

Une valeur préférée de la dureté est de 60 shore. Cette valeur correspond à une valeur standard d'éléments facilement trouvables sur le marché et qui assure un bon compromis entre l'usure et l'efficacité de transfert d'huile à la chaine de distribution.

L'invention concerne également un moteur comportant un système de lubrification tel que décrit ci-avant.

L'invention concerne aussi un véhicule automobile comportant un système de lubrification tel que décrit ci-avant.

D'autres caractéristiques et avantages apparaitront plus clairement à la lecture de la description suivante, d'un mode de réalisation préféré, donné à titre d'exemple non limitatif, en relation avec les dessins annexés, parmi lesquels :
- la figure 1 est une vue générale d'un mode de réalisation d'un système de lubrification selon l'invention dans lequel le transfert de l'huile jusqu'à la chaine de distribution est assuré par un galet roulant de friction ;
- la figure 2 est une vue illustrant le transfert d'huile vers la chaine de distribution par un galet roulant de friction.

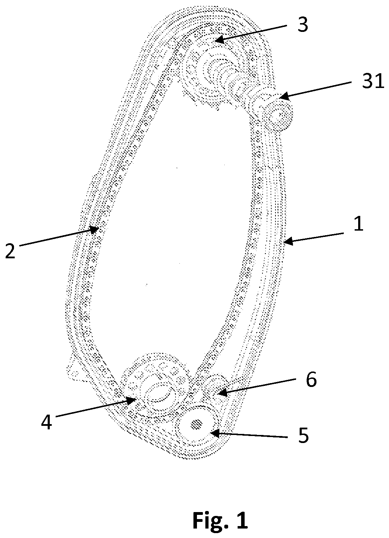

Une vue schématique partielle d'un moteur est représentée dans la figure 1. Sur cette vue schématique est représenté partiellement un carter 1 de distribution d'un moteur à l'intérieur duquel se trouve une chaine de distribution 2 comportant un ensemble de maillons. Ladite chaine de distribution 2 entoure un premier pignon 3 disposé dans une partie supérieure du moteur et auquel est fixé un arbre à cames 31 et un deuxième pignon 4 situé dans la partie inférieure du moteur, et fixé à une extrémité d'un vilebrequin, non représenté sur figure 1.

Dans la partie inférieure du moteur, se trouve également un galet roulant de fiction 5 mobile en rotation autour d'un axe de galet sensiblement parallèle à l'axe du vilebrequin. Ledit axe de galet est tenu par deux bras mobiles en pivotement autour d'un axe de pivotement parallèle à l'axe du vilebrequin, ledit axe de pivotement est fixé à une paroi du carter de distribution. L'axe de galet est poussé par ressort 6 vers la chaine de distribution ce qui assure un contact permanent du galet avec la chaine de distribution. De manière préférentielle, le contact entre le galet roulant et la chaîne de distribution se produit au niveau du deuxième pignon 4 qui procure une force d'opposition à l'appui du galet et permet d'assurer la fiabilité du système de captage.

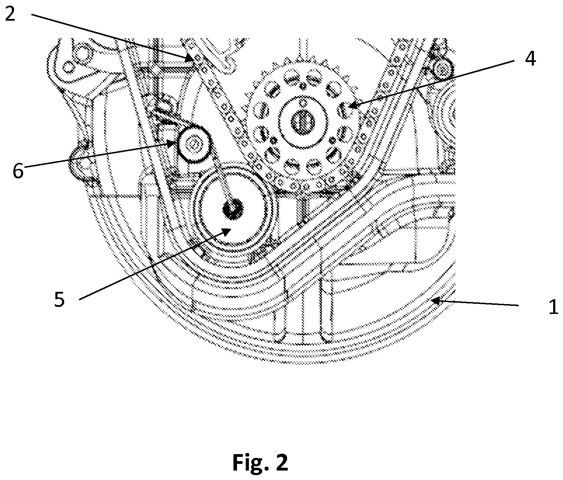

Le galet roulant de friction 5 est en partie immergé dans une quantité d'huile qui se trouve dans la partie la plus basse du carter 1 comme cela se voit sur la figure 2. Lorsque la chaine de distribution est en mouvement, le galet 5 entrainé par ladite chaîne, tourne dans un sens contraire au sens de rotation du deuxième pignon de distribution. Lors de cette rotation, le galet embarque une couche d'huile sur sa partie radiale périphérique extérieure. Le galet 5 étant en contact avec la chaine de distribution transmet alors l'huile qu'il a embarquée à la chaine de distribution et plus précisément dans les maillons de la chaine de distribution.

Ladite huile embarquée par les maillons de la chaine de distribution est alors remontée en haut du moteur grâce au mouvement de la chaine de distribution entre les deux pignons 3, 4. Cette quantité d'huile est ensuite récupérée par des moyens de réception, non représentés sur les dessins, agencés en haut du moteur. Lesdits moyens de réception sont connectés à des conduits de transfert (non représentés) pour diriger l'huile collectée vers les éléments du moteur à lubrifier dont les paliers de l'arbre à cames.

Pour assurer un bon transfert de l'huile du galet roulant de friction vers la chaine de distribution, on peut prévoir que la partie radiale périphérique extérieure de ce galet comporte un élément souple.

Avantageusement, cet élément souple est adhérisé pour assurer un bon maintien de l'élément souple en périphérie du galet roulant de friction.

À titre d'exemple, l'élément souple peut être un joint torique en élastomère ou en Viton®.

La dureté de cet élément souple peut être choisie entre 50 et 80 shore. De préférence, la dureté est de 60 shore pour assurer un bon compromis entre l'usures du galet et l'efficacité de transfert d'huile du galet vers la chaine de distribution.

L'invention ne se limite pas au mode de réalisation décrit. On peut prévoir différentes variantes sans pour autant sortir du cadre de l'invention. Par exemple, le galet peut être remplacé par tout autre moyen permettant le transfert de l'huile se trouvant en bas du carter à la chaine de distribution.

## Revendications

1. Système de captage d'huile de lubrification d'un moteur **caractérisé en ce qu'**il comprend,
- un carter du moteur comprenant des parois internes et des parois externes, ledit carter comportant une quantité d'huile dans une partie basse de ce carter,
- une chaine de distribution comportant des maillons aptes à remonter de l'huile d'une partie basse du moteur vers une partie haute du moteur,
- des moyens de transfert, agencés dans la partie basse du carter de manière à transférer de l'huile de ladite partie basse du carter aux maillons de la chaine de distribution, lorsque la chaine de distribution est en mouvement, lesdits moyens de transfert de l'huile comportent un galet roulant de friction en contacte avec la chaine.

2. Système de captage selon la revendication 1, **caractérisé en ce que** le galet roulant est mobile en rotation autour d'un axe de galet parallèle à l'axe du vilebrequin.

3. Système de captage selon l'une des revendications 1 ou 2, **caractérisé en ce que** le galet roulant de friction est maintenu en contact avec la chaine de distribution par un ressort.

4. Système de captage selon l'une des revendications 1 à 3 **caractérisé en ce que** le galet roulant de friction comporte dans une partie radiale périphérique extérieure un élément souple de captation d'huile.

5. Système de captage selon la revendication 4, **caractérisé en ce que** l'élément souple est adhérisé.

6. Système de captage selon l'une des revendications 4 ou 5, **caractérisé en ce que** l'élément souple est un joint torique.

7. Système de captage selon l'une des revendications 4 à 6, **caractérisé en ce que** l'élément souple est un élastomère ou un Viton®.

8. Système de captage selon l'une des revendications 4 à 7, **caractérisé en ce que** l'élément souple a une dureté entre 50 et 80 shore.

9. Moteur, **caractérisé en ce qu'**il comporte un système de captage d'huile selon l'une des revendications précédentes.

## Patentansprüche

1. System zur Aufnahme von Schmieröl eines Motors, **dadurch gekennzeichnet, dass** es umfasst:
- ein Motorgehäuse mit Innenwänden und Außenwänden, wobei das Gehäuse eine Ölmenge in einem unteren Teil dieses Gehäuses enthält,
- eine Steuerkette, die Glieder aufweist, die geeignet sind, Öl aus einem unteren Teil des Motors zu einem oberen Teil des Motors hochzufördern,
- Transfermittel, die im unteren Teil des Gehäuses so angeordnet sind, dass sie Öl des unteren Teils des Gehäuses an die Kettenglieder der Steuerkette transferieren, wenn die Steuerkette in Bewegung ist, wobei die Öltransfermittel ein Reibrad umfassen, das in Kontakt mit der Kette ist.

2. Aufnahmesystem nach Anspruch 1, **dadurch gekennzeichnet, dass** das Rad um eine parallel zur Achse der Kurbelwelle verlaufende Radachse drehbeweglich ist.

3. Aufnahmesystem nach einem der Ansprüche 1 oder 2, **dadurch gekennzeichnet, dass** das Reibrad von einer Feder in Kontakt mit der Steuerkette gehalten wird.

4. Aufnahmesystem nach einem der Ansprüche 1 oder 3 **dadurch gekennzeichnet, dass** das Reibrad in einem radial äußeren Umfangsteil ein elastisches Ölaufnahmeelement aufweist.

5. Aufnahmesystem nach Anspruch 4, **dadurch gekennzeichnet, dass** das elastische Element haftend ist.

6. Aufnahmesystem nach einem der Ansprüche 4 oder 5, **dadurch gekennzeichnet, dass** das elastische Element ein O-Ring ist.

7. Aufnahmesystem nach einem der Ansprüche 4 bis 6, **dadurch gekennzeichnet, dass** das elastische Element ein Elastomer oder ein Viton® ist.

8. Aufnahmesystem nach einem der Ansprüche 4 bis 7, **dadurch gekennzeichnet, dass** das elastische Element eine Shore-Härte zwischen 50 und 80 hat.

9. Motor, **dadurch gekennzeichnet, dass** er ein System zur Aufnahme von Öl nach einem der vorhergehenden Ansprüche aufweist.

## Claims

1. System for collecting the lubricating oil of an engine, **characterized in that** it comprises:
- an engine casing comprising inner walls and outer walls, said casing including a quantity of oil in a lower portion of this casing;
- a timing chain including links that are capable of bringing oil up from a lower portion of the engine to an upper portion of the engine;
- transfer means that are arranged in the lower portion of the casing so as to transfer the oil from said lower portion of the casing to the links in the timing chain, when the timing chain is in motion, said oil transfer means including a friction roller in contact with the chain.

2. Collecting system according to Claim 1, **characterized in that** the roller is rotatably movable about a roller axis that is parallel to the axis of the crankshaft.

3. Collecting system according to either of Claims 1 and 2, **characterized in that** the friction roller is held in contact with the timing chain by means of a spring.

4. Collecting system according to one of Claims 1 to 3, **characterized in that** the friction roller includes, in an outer peripheral radial portion, a flexible oil collecting element.

5. Collecting system according to Claim 4, **characterized in that** the flexible element is adhesively bonded.

6. Collecting system according to either of Claims 4 and 5, **characterized in that** the flexible element is an O-ring.

7. Collecting system according to one of Claims 4 to 6, **characterized in that** the flexible element is an elastomer or a Viton®.

8. Collecting system according to one of Claims 4 to 7, **characterized in that** the hardness of the flexible element is between 50 and 80 shore.

9. Engine, **characterized in that** it includes an oil collecting system according to one of the preceding claims.
